**Europäisches Patentamt**

**European Patent Office**

**Office européen des brevets**

(11) Veröffentlichungsnummer: **0 200 868**
**A2**

## (12) EUROPÄISCHE PATENTANMELDUNG

(21) Anmeldenummer: 86102724.1

(22) Anmeldetag: 03.03.86

(51) Int. Cl.⁴: **F16K 27/02** , F16K 1/226

(30) Priorität: 08.05.85 DE 3516573

(43) Veröffentlichungstag der Anmeldung:
17.12.86 Patentblatt 86/46

(84) Benannte Vertragsstaaten:
CH FR GB IT LI

(71) Anmelder: **Müller, Fritz**
**Neuer Wasen 6**
**D-7118 Ingelfingen-Criesbach(DE)**

(72) Erfinder: **Müller, Fritz**
**Neuer Wasen 6**
**D-7118 Ingelfingen-Criesbach(DE)**
Erfinder: **Pienta, Lothar**
**Teichstrasse 17**
**D-7118 Ingelfingen 2(DE)**

(74) Vertreter: **Leyh, Hans, Dr,-Ing.**
**Patentanwälte Berendt, Leyh + Hering**
**Innere Wiener Strasse 20**
**D-8000 München 80(DE)**

(54) Klappenventil.

(57) Die Erfindung betrifft ein Klappenventil mit einem zweiteiligen Gehäuse und einer Absperrklappe. Die Trennebene der beiden Gehäuseteile verläuft in einem spitzen Winkel zur Normalen auf die Mittelachse·des Gehäuses und die Spindel der Absperrklappe ist außerhalb der Trennebene und außerhalb der in der Trennebene liegenden Dichtung durch das Gehäuse hindurchgeführt.

Die beiden Gehäuseteile selbst sind identisch ausgebildet, so daß sie mittels einer einzigen Spritzform hergestellt werden können.

EP 0 200 868 A2

# FIG.1

## Klappenventil

Die Erfindung betrifft ein Klappenventil, insbesondere für aggressive Medien, mit einem zweiteiligen Gehäuse, einer in dem Gehäuse drehbar angeordneten Absperrklappe, die mit einer im Gehäuse geführten und aus diesem heraus führenden Spindel verbunden ist.

Klappenventile dieser Art sind bekannt.

Bei Verwendung der Ventile für aggressive Medien ist vorgeschlagen worden, die Absperrklappen und die Spindel mit Kunststoff zu ummanteln, sowie das Gehäuse und die Spindelführungen mit Kunststoff auszukleiden. Dabei ist es jedoch erforderlich, die Dichtung im Gehäuse, die in der Teilungsebene zwischen den beiden Gehäuseteilen angeordnet ist, zu durchbrechen bzw. zu unterbrechen, da die Spindel in der Trennebene der beiden Gehäusehälften radial nach außen geführt ist. Obwohl dies relativ aufwendig ist, kann auch hier zwischen den Kunststoffbeschichtungen Leckage auftreten.

Die Erfindung sucht diesen Nachteil zu vermeiden.

Die schlägt hierzu vor, die Teilungsebene des Gehäuses in einem spitzen Winkel zur Normalen auf die Symmetrieachse des Gehäuses anzuordnen.

Dieser Winkel kann etwa 13-17°, vorzugsweise etwa 15° betragen.

Die Spindel der Absperrklappe ist hierbei vorteilhafterweise außerhalb der Teilungsebene und insbesondere längs der Normalen durch das Gehäuse geführt, und die Mittelebene der Absperrklappe bildet zur Längsachse der Spindel denselben spitzen Winkel, wie die Teilungsebene des Gehäuses.

Dies hat den Vorteil, daß die Bohrungen im Gehäuse, durch welche die Spindel hindurchgeführt und in denen sie gelagert ist, versetzt zur Teilungsebene des Gehäuses liegen und keine Berührung mehr mit der letzteren haben.

Die Dichtung, die in der Teilungsebene des Gehäuses angeordnet ist und mit der die Absperrklappe zusammenwirkt, ist daher vorteihafterweise einteilig und frei von Unterbrechungen oder Durchgangsöffnungen ausgebildet.

Die Spindel ist vorzugsweise in Lagerbüchsen gelagert, von denen je eine in jeder der beiden Hälften des Gehäuses angeordnet ist.

Dies erleichtert einerseits den Einbau, da die Spindel zuerst in das Gehäuse eingeschoben und die Lagerbüchsen danach eingesetzt werden können, andererseits wird die Abdichtung der Spindeldurchführung vereinfacht, da zwischen Spindel und Lagerbüchse bzw. zwischen der letzteren und dem Gehäuse handelsübliche O-Ringe verwendet werden können.

Die beiden Gehäusehälften sind vorzugsweise identisch ausgebildet, so daß nur ein Werkzeug bzw. nur eine Spritzform zur Herstellung der Gehäusehälften erforderlich ist.

Eine beispielsweise Ausführungsform der Erfindung wird nachfolgend anhand der Zeichnung erläutert, in der

Fig 1. einen Querschnitt durch das Klappenventil zeigt.

Fig. 2 zeigt eine Ansicht des Klappenventils in Blickrichtung des Pfeils P von Fig. 1 bei geschlossener Absperrklappe.

Fig. 3 zeigt in Seitenansicht, teilweise geschnitten einen Gehäuseteil des Klappenventils.

Fig. 4 zeigt in Seitenansicht die Absperrklappe des Klappenventils.

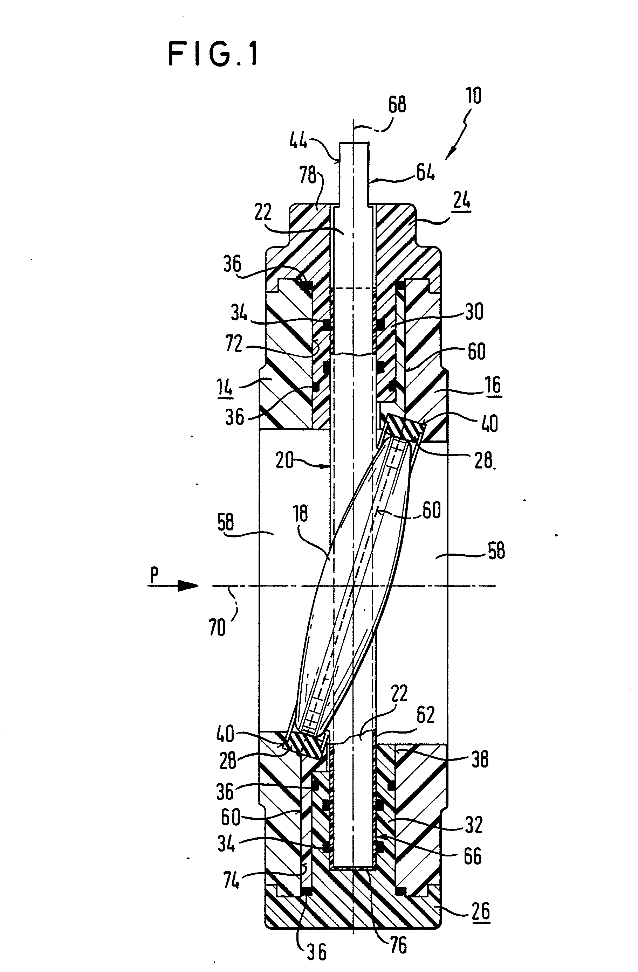

Fig. 1 zeigt eine Klappenventil 10 mit einem Gehäuse 12, das aus zwei Teilen 14 und 16 gebildet ist.

In dem Gehäuse 12 ist eine Absperrklappe 18 - schwenkbar angeordnet, die den Durchgangskanal 58 je nach Stellung ganz oder teilweise öffnet oder schließt, wie an sich bekannt. Die Absperrklappe 18 ist mit einer Spindel 20 verbunden, die im Gehäuse drehbar gelagert ist und an ihrem einen, in der Zeichnung oberen Ende 64 aus dem Gehäuse 12 herausgeführt ist, während ihr anderes, in der Zeichnung unteres Ende 66 im Gehäuse endigt.

Im Gehäuse ist ein Dichtungsring 28 aus einem geeigneten Gummimaterial oder Kunststoffmaterial, eingebaut, mit welchem die Absperrklappe 18 zusammenwirkt.

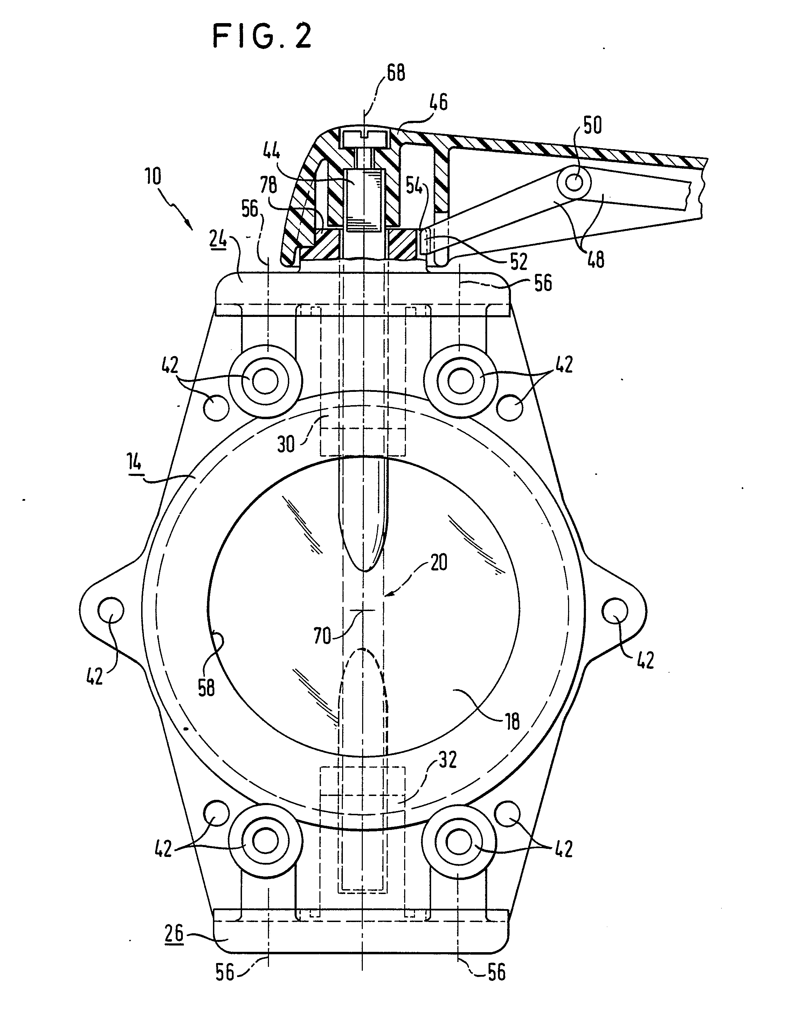

Die Spindel 20 ist an ihrem oberen Ende 64 in Form eines Vierkantes oder eines Zweikantes oder Zweiflachs 44 ausgebildet, auf den, wie Fig. 2 zeigt, ein Betätigungsgriff 46 aufgesetzt und geeignet mit dem Ende 64 der Spindel 20 verbunden ist, um die letztere um ihre Achse 68 drehen und dadurch die Absperrklappe 18 einstellen zu können.

Die Mittelachse 68 der Spindel 20 verläuft senkrecht zur Mittelachse 70 des Gehäuses 12, die Absperrklappe 18 bildet aber nun (im Gegensatz zu bisherigen Ausführungsformen) einen spitzen Winkel αzur Mittelachse 68 der Spindel 20.

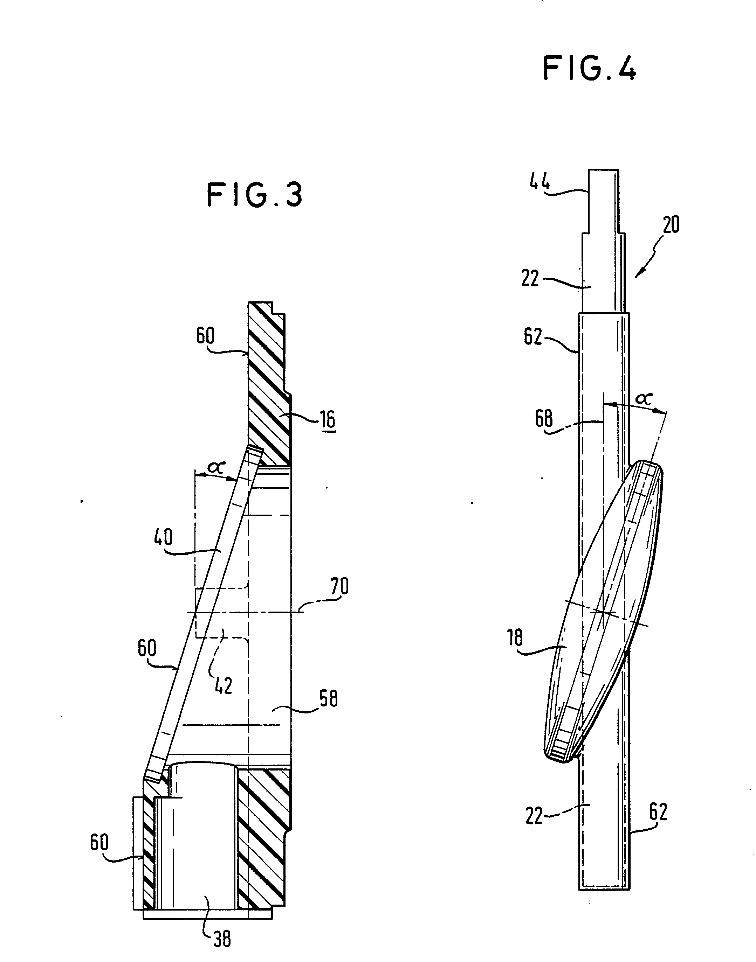

Dieser spitze Winkel a, der etwa im Bereich von 15-19°, insbesondere bei 17° liegt, ist, wie Fig. 4 zeigt, zwischen der Mittelebene der Absperrklappe 18 und der Mittelachse 68 der Spindel 20 gebildet.

Wie Fig. 1 zeigt, ist nun der Dichtring 28 so im Gehäuse 12 eingebaut, daß seine Symmetrieebene oder Mittelebene, die in geschlossener Stellung der Absperrklappe 18 mit der Symmetrieebene oder Mittelebene der Absperrklappe 18 zusammenfällt, wie Fig. 1 ebenfalls zeigt, praktisch denselben Winkel a zur Mittelachse 68 der Spindel 20 bildet.

Auch die Teilungsebene 60 im Bereich des Dichtringes 28 ist im Winkel a zur Senkrechten auf die Mittelachse 70 des Gehäuses 12 angeordnet. Infolge dieser Lage des Dichtringes 28 und der Absperrklappe 18 verläuft die Spindel 20 der Absperrklappe 18 außerhalb des Dichtringes 28 und außerhalb der Teilungsfuge oder Teilungsebene 60 des aus den beiden Teilen 14 und 16 bestehenden Gehäuses 12.

(Bei den bisherigen Ausführungsformen verläuft die Spindel durch den Dichtring und durch die Teilungsebene des Gehäuses hindurch, was hinsichtlich der Abdichtung hohe Aufwendungen erfordert).

Trotz der Schrägstellung der Absperrklappe 18 und des Dichtringes 28 sind beide kreisförmig - (nicht elliptisch) ausgebildet, d.h. der Innenumfang des Dichtringes 28 und der Außenumfang der Absperrklappe 18 sind beide kreisförmig.

Beispielsweise beträgt bei einer Nennweite von 150 mm der Außendurchmesser der Absperrklappe 18 etwa 152 mm.

Da die Spindel 20 der Absperrklappe 18 das Gehäuse außerhalb der Teilungsebene und außerhalb des Dichtringes 28 durchsetzt, ist die Abdichtung der Spindel wesentlich einfacher als bei den bisherigen Vorrichtungen dieser Art.

Grundsätzlich genügt es, z.B. zwischen der Spindel und der entsprechenden Bohrung im Gehäuse zur Abdichtung geeignete O-Ringe anzuordnen.

In der dargestellten Ausführungsform sind jedoch die beiden Gehäuseteile 14, 16, die zusammen das Gehäuse 12 des Klappenventils bilden, oben und unten je durch einen Deckel 24, bzw. 26 abgeschlossen.

Der Deckel 24 hat einen rohrförmigen Ansatz, der in das Gehäuse hineinragt und in einer Bohrung 72 des Gehäuses sitzt.

Dieser Ansatz des Deckels 24 bildet eine Lagerbüchse 30 für das obere Ende 64 der Spindel 20. Zwischen der Spindel 20 und der Lagerbüchse 30 sind zur Abdichtung O-Ringe 34 angeordnet und zwischen der letzteren und dem Gehäuse sind zur Abdichtung O-Ringe 36 angeordnet.

In entsprechender Weise ist der Deckel 26 mit einem in das Gehäuse hineinragenden Ansatz versehen, der in einer Bohrung 74 des Gehäuses sitzt und der eine Lagerbüchse 32 bildet, in welcher das untere Ende 66 der Spindel 20 gelagert ist. Zwischen Spindel und Lagerbüchse sind zur Abdichtung O-Ringe 34 eingebaut und zwischen Gehäuse und Lagerbüchse sind zur Abdichtung O-Ringe 36 eingebaut.

Durch den Deckel 26 bzw. die Lagerbüchse 32 kann die Spindel 20 auch in axialer Richtung abgestützt werden.

Nach einer weiteren Ausgestaltung der Erfindung sind nun die beiden Teile 14, 16, die zusammen das Gehäuse 12 bilden, identisch ausgebildet, so daß sie in ein-und derselben Form hergestellt werden können. (Die Gehäuseteile bestehen insbesondere aus einem spritzfähigen Kunststoffmaterial und werden durch Einspritzen des flüssigen Kunststoffmaterials in eine Spritzform hergestellt.

Da jedoch die Spindel 20 mit ihrem einen Ende 64 durch das Gehäuse nach außen herausgeführt ist, während ihr anderes Ende 66 innerhalb des Gehäuses endigt, entstehen konstruktive Unterschiede, die eine entsprechende Anpassung des Gehäuses bedingen.

Sämtliche konstruktiven Unterschiede jedoch, die durch die Lagerung und Anordnung der Spindel 20 bedingt sind, sind in den beiden Deckeln 24 und 26 sowie deren Lagerbüchsen 30 und 32 aufgefangen.

Mit anderen Worten, die Tatsache, daß die Spindel 20 an ihrem oberen Ende 64 aus dem Gehäuse 12 herausgeführt ist, während ihr unteres Ende 66 im Gehäuse 12 endigt, bedingt zwar eine unterschiedliche kontruktive Gestaltung' der beiden Deckel 24 und 26, nicht jedoch der beiden Teile 14 und 16 des Gehäuses 12, die aus diesem Grunde identisch ausgeführt werden können, wodurch beträchtliche Einsparungen, z.B. bei den Spritzformen, ermöglicht werden.

Wie Fig. 1 zeigt, hat der obere Deckel 24 und seine Lagerbüchse 30 eine durchgehende Bohrung, durch die die Spindel 20 hindurchverläuft, während der untere Deckel 26 und seine Lagerbüchse 32 eine Sacklochbohrung haben, in welche das untere Ende 66 der Spindel 20 hineinragt und endigt, wobei die untere Stirnfläche 76 der Spindel 20 auf der entsprechenden Stirnfläche der Lagerbüchse 32 aufliegt.

Das Gehäuse 12 ist längs der Teilungsebene 60 geteilt, woraus sich ergibt, daß die Lagerbüchse 30 des Deckels 24 ausschließlich im Teil 14 des Gehäuses und die Lagerbüchse 32 des Deckels 26 ausschließlich im Teil 16 des Gehäuses angeordnet ist, d.h. beide Lagerbüchsen 30 und 32 liegen außerhalb der Teilungsebene 60 des Gehäuses 12.

Die Betätigung des Klappenventils erfolgt in bekannter Weise, d.h. die Spindel 20 wird um ihre Mittelachse 68 gedreht und dadurch die Absperrklappe 18 geschwenkt aus ihrer in Fig. 1 dargestellten geschlossenen Position in die geöffnete Position oder in jede Mittelstellung.

Fig. 2 zeigt eine Seitenansicht des Klappenventils 10 nach Fig. 1 in Blickrichtung des Pfeiles P von Fig. 1.

Das Gehäuse, bzw. seine Teile 14 und 16 sind mit Angüssen 42 und entsprechenden Bohrungen für die Durchführung von Schrauben zum Verbinden der beiden Gehäuseteile 14 und 16 versehen.

Auf das obere Ende der Spindel 20, d.h. auf den Vierkant oder Zweikant 44, ist der Betätigungsgriff 46 aufgesetzt und z.B. mit der Spindel 20 verschraubt.

Der Griff 46 ist in der dargestellten Ausführungsform mit einem Bügel 48 versehen, der um einen im Betätigungsgriff 46 befestigten Lagerzapfen 50 schwenkbar ist.

Der Bügel 48 hat an seinem, dem Klappenventil zugewandten Ende eine Nase oder Raste 52, die in eine am Umfang eines Ansatzes 78 des Deckels 24 ausgebildete Verzahnung 54 eingreifen kann.

Wird der Bügel 48 im Gegenuhrzeigersinn um den Lagerzapfen 50 geschwenkt, so löst sich die Raste 52 von der Verzahnung 54 und der Betätigungsgriff 46 kann geschwenkt werden, wodurch die Spindel 20 um ihre Mittelachse gedreht und damit die Absperrklappe verstellt wird. Nach Beendigung dieser Drehbewegung wird der Bügel 48 losgelassen und beispielsweise durch eine nicht-gezeigte Feder im Uhrzeigersinn um den Lagerzapfen 50 geschwenkt, wodurch die Raste 52 in die Verzahnung 54 einrastet, womit die Stellung der Spindel 20 und damit der Absperrklappe 18 arretiert und fixiert ist.

Die Deckel 24 und 26 sind geeignet durch Schrauben 56 am Gehäuse 12 befestigt.

Fig. 3 zeigt eine teilweise geschnittene Seitenansicht des Gehäuseteils 16, wobei dieser jedoch identisch mit dem Gehäuseteil 14 ist und die beiden Teile zur Bildung des Gehäuses 12 um 180° relativ zueinander geschwenkt angeordnet und miteinander verbunden werden.

Wie Fig. 3 zeigt, hat das Gehäuseteil 16 eine Bohrung oder Ausnehmung 38, in welcher bei aufgesetztem Deckel 26 dessen Lagerbüchse 32 ausgenommen ist. (Beim Gehäuseteil 14 ist entsprechend in der Bohrung 38 der Lagerzapfen 30 des Deckels 24 aufgenommen).

Der Gehäuseteil 16 ist ferner mit einer zylindrischen Ausnehmung 40 versehen, in der später beim Zusammenbau der Dichtungsring 28 aufgenommen ist.

Im fertigen Gehäuse 12 sitzt der Dichtungsring 28, wie Fig. 1 zeigt, zur Hälfte in der Ausnehmung 40 des Gehäuseteils 16 und zur Hälfte in der Ausnehmung 40 des Gehäuseteils 14, d.h. der Dichtungsring 28 liegt in der Teilungsfuge oder Teilungsebene des Gehäuses 12, er ist aber selbst einteilig und frei von irgendwelchen Bohrungen, Durchbrüchen oder Unterbrechungen.

Die Ebene der Ausnehmung 40 liegt im Winkel a zur Normalen bzw. Senkrechten auf die Mittelachse 70 des Gehäuses bzw. des Gehäuseteils 16.

Fig. 4 zeigt eine Seitenansicht der Absperrklappe 18 mit der Spindel 20.

Die Spindel 20 hat einen zylindrischen Kern 22 aus Metall, z.B. aus Stahl, und dieser Kern 22 ist umspritzt mit einem geeigneten Kunststoffmaterial, z.b. PVC. Der den zylindrischen Kern 22 umgebende Mantel 62 der Spindel 20 und die Absperrklappe 18 sind dabei vorzugsweise einteilig ausgebildet und in einem Spritzvorgang hergestellt. Die Mittelebene der Absperrklappe 18 bildet hierbei, wie bereits ausgeführt, einen Winkel a zur Mittelachse 68 der Spindel 20, wobei der Winkel a im Bereich von etwa 15-19° liegt und vorzugsweise 17° beträgt.

Der Außenumfang der Absperrklappe 18 ist, wie ebenfalls bereits erwähnt, kreisförmig, ebenso wie der Innenumfang des Dichtungsringes 28.

Die erfindungsgemäße Ausbildung der Absperrklappe und des Klappengehäuses ermöglicht eine Durchführung der Spindel der Absperrklappe durch das Gehäuse außerhalb der Dichtung und außerhalb der Teilungsfuge des Gehäuses, wodurch bisher immer wieder auftretende Dichtungsprobleme eliminiert werden.

Als Material für das Gehäuse und die Absperrklappe werden inbesondere Kunststoffe verwendet, die widerstandsfähig z.B. gegen aggressive Medien sind.

Beim Zusammenbau des Klappenventils wird zuerst die Spindel 20 mit ihrem oberen Ende 64, z.B. durch die Bohrung 72 des Gehäuseteils 14 hindurchgeführt. Danach wird der Gehäuseteil 16 vom Ende 66 der Spindel 20 her auf den Gehäuseteil 14 aufgeschoben, wobei das Ende 66 der Spindel 20 in die Bohrung 74 des Gehäuseteils 16 hineinragt. Danach werden die beiden Deckel 24 und 26 auf das so gebildete Gehäuse aufgesetzt, wobei die Lagerbüchse 30 des Deckels 24 in die Bohrung 72 eingeführt wird und die Lagerbüchse 32 des Deckels 26 in die Bohrung 74 eingeschoben wird.

Die Enden 64 und 66 der Spindel 20 sind dann in den beiden Lagerbüchsen aufgenommen und geführt. (Vor dem Einsetzen der Deckel sind selbstverständlich die O-Ringe 34 und 36 entsprechend in die in den Lagerbüchsen 30 und 32 hierzu vorgesehenen Nuten einzusetzen).

Nach dem Einsetzen der Deckel können die einzelnen Teile des Gehäuses miteinander verschraubt werden.

**Ansprüche**

1. Klappenventil, insbesondere für aggressive Medien, mit einem zweiteiligen Gehäuse, einer in dem Gehäuse drehbar angeordneten Absperrklappe, die mit einer in dem Gehäuse geführten und aus diesem heraus führenden Spindel verbunden ist, dadurch gekennzeichnet, daß die Teilungsebene (60) des Gehäuses (12) in einem spitzen Winkel (a) zur Normalen auf die Mittelachse (70) des Gehäuses (12) verläuft.

2. Klappenventil nach Anspruch 1, dadurch gekennzeichnet, daß der Winkel (a) etwa 15-19°, vorzugsweise etwa 17° beträgt.

3. Klappenventil nach Anspruch 1 oder 2, dadurch gekennzeichnet, daß die Spindel(20) der Absperrklappe (18) außerhalb der Teilungsebene (60) durch das Gehäuse (12) geführt ist.

4. Klappenventil nach einem der vorhergehenden Ansprüche, dadurch gekennzeichnet, daß die Spindel (20) längs der Normalen auf die Mittelachse (70) durch das Gehäuse (12) geführt ist und daß die Mittelebene der Absperrklappe (18) im Winkel (a) zur Mittelachse (68) der Spindel (20) verläuft.

5. Klappenventil nach einem der vorhergehenden Ansprüche, dadurch gekennzeichnet, daß die Absperrklappe (18) und die Spindel (20) einteilig ausgebildet sind.

6. Klappenventil nach einem der vorhergehenden Ansprüche, dadurch gekennzeichnet, daß die in der Teilungsebene (60) des Gehäuses (12) angeordnete Dichtung (28), mit der die Absperrklappe (18) zusammenwirkt, einteilig und frei von Durchgangsöffnungen ausgebildet ist.

7. Klappenventil nach einem der vorhergehenden Ansprüche, dadurch gekennzeichnet, daß die Spindel (20) in Lagerbüchsen (30, 32) gelagert ist, von denen je eine in jedem der beiden Teile (14, 16) des Gehäuses (12) angeordnet ist.

8. Klappenventil nach einem der vorhergehenden Ansprüche, dadurch gekennzeichnet, daß die beiden Teile (14, 16) des Gehäuses (12) identisch ausgebildet sind.

9. Klappenventil nach Anspruch 7, dadurch gekennzeichnet, daß die Lagerbüchsen (30, 32) jeweils einteilig mit entsprechenden Deckeln (24, 26) ausgebildet sind, durch die das Gehäuse (12) oben und unten geschlossen ist.

10. Klappenventil nach einem der vorhergehenden Ansprüche, dadurch gekennzeichnet, daß die Spindel (20) in jeder Einstellung mittels eines Ratschenmechanismus (52, 54) arretierbar ist, von dem der eine Teil (54) am Dekel (24) und der andere Teil (52) an einem Betätigungsgriff (46) ausgebildet ist.

# FIG.1

# FIG. 2

FIG.3

FIG.4